# EUROPEAN PATENT SPECIFICATION

(11) **EP 3 407 700 B1**
(45) Date of publication and mention of the grant of the patent: **07.10.2020**
(21) Application number: 17701318.2
(22) Date of filing: 24.01.2017
(51) Int. Cl.: A01D 34/74

(54) **LOCKING ASSEMBLY FOR A LAWN MOWER CUTTING HEIGHT ADJUSTMENT ASSEMBLY**
BLOCKIERANORDNUNG FÜR EINE MÄHHÖHENEINSTELLVORRICHTUNG FÜR RASENMÄHER
SYSTEM DE BLOCAGE POUR ENSEMBLE DE RÉGLAGE DE HAUTEUR DE COUPE DE TONDEUSE À GAZON

(30) Priority: 25.01.2016 US 201662286546 P
(43) Date of publication of application: 05.12.2018
(73) Proprietor: Husqvarna AB, 561 82 Huskvarna (SE)
(72) Inventor: BAYKARA, Yunus, 73732 Esslingen (DE)
(86) International application number: PCT/EP2017/051401
(87) International publication number: WO 2017/129551

(56) References cited:
- WO-A1-2016/165755
- CN-U- 201 509 441
- GB-A- 1 141 011
- GB-A- 2 495 577

## Description

### TECHNICAL FIELD

Example embodiments generally relate to outdoor power equipment and, more particularly, relate to a walk behind lawn mower with an ability to easily adjust cutting height.

### BACKGROUND

Yard maintenance tasks are commonly performed using various tools and/or machines that are configured for the performance of corresponding specific tasks. Certain tasks, like grass cutting, are typically performed by lawn mowers. Lawn mowers themselves may have many different configurations to support the needs and budgets of consumers. Walk-behind lawn mowers are typically relatively compact, have comparatively small engines and are relatively inexpensive. Meanwhile, at the other end of the spectrum, riding lawn mowers, such as lawn tractors, can be quite large.

Walk behind models are often used when smaller lots or tighter areas are to be mowed. Some, relatively simple walk behind models may move responsive only to the pushing force provided by the operator. However, other models may provide power to the wheels to assist the operator relative to providing mobility for the lawn mower. In either case, the operator typically controls the lawn mower and/or pushes the lawn mower via a handle assembly that extends rearward and upward behind the lawn mower to allow the operator to engage the handle assembly while walking behind the lawn mower.

Walk behind models typically provide a rotating blade within a cutting deck that may have an adjustable height to allow the length at which the grass is cut to be controlled. The adjustment of cutting height is typically controlled by manually adjusting an adjustment assembly that allows height of the cutting deck relative to each wheel to be individually adjusted. In other examples, the wheel axle itself may be adjusted or some form of central adjustment may be attempted. Although effective, such mechanisms can be tedious to adjust, and it is also possible that the operator may unwittingly make adjustments that result in uneven cutting for some such mechanisms.

GB2495577 A shows a height-adjusting equipment for adjusting the cutting height of a lawnmower. The height-adjusting equipment has an axle that has a motion trace of arc shape and could be used for adjusting the height of the cutter relative to the deck.

Some adjustment assemblies have been developed to make the adjustment process easier and more intuitive. However, making these adjustment assemblies simpler and more intuitive can also lead to deformation of certain parts, which can impact the ability of the assemblies to operate properly. Accordingly, it is be desirable to provide an improved cutting height adjustment mechanism.

### BRIEF SUMMARY OF SOME EXAMPLES

Some example embodiments therefore provide for improved lawn mower design by providing a cutting height adjustment assembly that can be operated simply and intuitively. For example, some embodiments provide a single adjustment mechanism that can be easily operated to change the cutting height by making an adjustment to the height of the cutting deck relative to each of the wheels. The single adjustment mechanism can be operated with one hand and consistently adjust all four wheel heights simultaneously. The wheel heights may thereafter be reliably maintained and the adjustment mechanism may be used over many cycles without any reduction in the usability or durability of the mechanism. Some example embodiments provide for improving the operator experience relative to the ease of use and convenience associated with adjusting cutting height of the lawn mower and overall operability of the lawn mower.

In an example embodiment, a lawn mower is provided. The lawn mower include a blade housing configured to house at least one blade, a motor configured to selectively rotate the at least one blade within the blade housing, a mobility assembly including front wheels and rear wheels, and a cutting height adjustment assembly. The cutting height adjustment assembly is configured to convert linear movement of a linking member that is operably coupled between at least one of the front wheels and at least one of the rear wheels into a height adjustment of the blade housing. The cutting height adjustment assembly includes a locking assembly having a locking member that engages a guide that is operably coupled to the blade housing at five or more contact points to hold the cutting height adjustment assembly at a selected height of the blade housing.

### BRIEF DESCRIPTION OF THE SEVERAL VIEWS OF THE DRAWING(S)

Having thus described the invention in general terms, reference will now be made to the accompanying drawings, which are not necessarily drawn to scale, and wherein:
FIG. 1 illustrates a perspective view of a walk-behind lawn mower having a cutting height adjustment assembly according to an example embodiment;
FIG. 2 illustrates a side, cross section view of the lawn mower of one example with the section cut passing through the cutting height adjustment assembly to provide a better view of various components of the cutting height adjustment assembly in accordance with an example embodiment;
FIG. 3 illustrates a zoomed in or close up view of the cross section view of FIG. 2 in accordance with an example embodiment;
FIG. 4 illustrates a top view of a guide and guide portion to illustrate how forces that can be experienced in some cases could degrade sidewall integrity of the guide portion;
FIG. 5 illustrates a cross section view of a locking member in accordance with an example embodiment; and
FIG. 6 illustrates a perspective view of the locking member of an example embodiment.

### DETAILED DESCRIPTION

Some example embodiments now will be described more fully hereinafter with reference to the accompanying drawings, in which some, but not all example embodiments are shown. Indeed, the examples described and pictured herein should not be construed as being limiting as to the scope, applicability or configuration of the present disclosure. Like reference numerals refer to like elements throughout. Furthermore, as used herein, the term "or" is to be interpreted as a logical operator that results in true whenever one or more of its operands are true. As used herein, operable coupling should be understood to relate to direct or indirect connection that, in either case, enables functional interconnection of components that are operably coupled to each other.

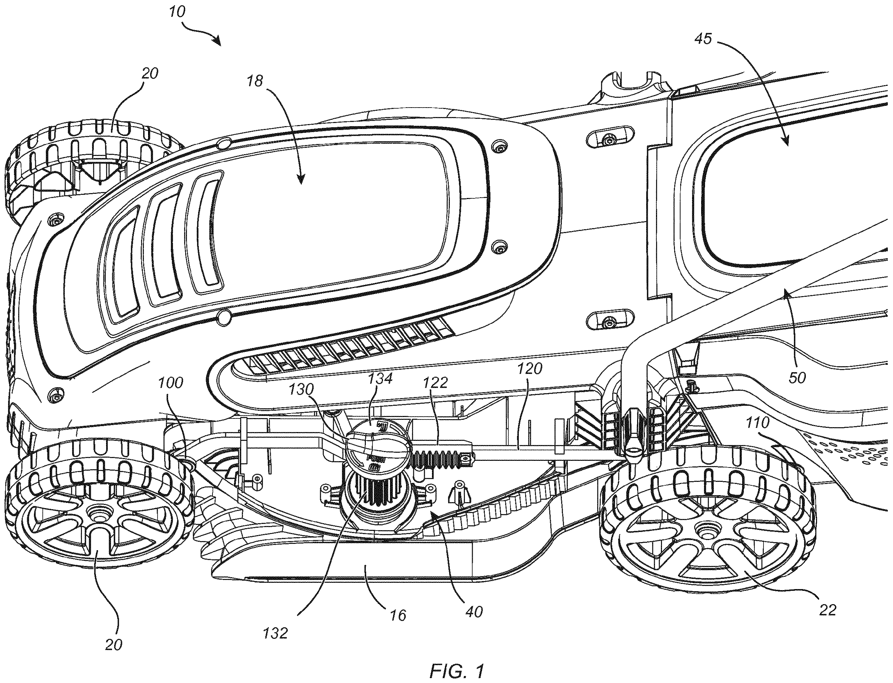

FIG. 1 illustrates a perspective view of a walk-behind lawn mower 10 of an example embodiment. An operator may be located at an operator location behind the lawn mower 10. The lawn mower 10 of FIG. 1 includes a blade housing 16 that house a rotatable cutting blade (not shown). The cutting blade is suspended above the ground at the end of a rotatable shaft (e.g., a drive shaft - again not shown in FIG. 1) that is turned responsive to operation of a motor 18, such as a gasoline powered engine or an electric motor. Operation of the motor 18 may be initiated by a recoil starter via pulling of a recoil starter handle by the operator. However, in other embodiments, the motor 18 may alternatively be started via a key, switch, electronic ignition or other similar device. In the example of FIG. 1, the lawn mower 10 is an electric powered mower, and thus, an electronic ignition, switch, and/or the like may be expected to provide for starting of the motor 18.

The lawn mower 10 include a mobility assembly on which a substantial portion of the weight of the lawn mower 10 rest when the lawn mower 10 is stationary. The mobility assembly may also provide for movement of the lawn mower 10. In some cases, the mobility assembly may be driven via power from the motor 18 that may be selectively provided to ground engaging wheels (e.g., front wheels 20 and rear wheels 22), which make up the mobility assembly. However, in other cases, the ground engaging wheels may not be powered and may move responsive to a push force being exerted by the operator.

In some examples, the ground engaging wheels are adjustable in their respective heights relative to the blade housing 16. Adjusting the height of the front wheels 20 and/or the back wheels 22 relative to the blade housing 16 may be employed in order to provide a level cut and/or to adjust the height of the cutting blade. In some embodiments, a cutting height adjustment assembly 40 is provided to interface with the front wheels 20 and/or the back wheels 22 to adjust their respective heights relative to the blade housing 16. Moreover, in an example embodiment, the cutting height adjustment assembly 40 may be operated with one hand in order to simultaneously adjust a position of the blade housing 16 relative to the front wheels 20 and the back wheels 22 as described in greater detail below.

Rotation of the cutting blade (e.g., in a plane substantially parallel to the ground or with a small blade inclination (e.g., 1 to 2°) may generate grass clippings, and/or other debris that may be ejected from the blade housing 16. In some cases, the clippings/debris may be ejected from a side or rear of the blade housing 16. Some lawn mowers may employ a collector 45 to collect discharged clippings/debris, while others may simply eject the clippings/debris onto the ground adjacent to the lawn mower 10.

In an example embodiment, the lawn mower 10 further include a handle assembly 50. The handle assembly 50 may include one or more handle members that extend generally rearward and upward from a rear portion of the blade housing 16. The handle assembly 50 may be used to provide propulsion and/or steering control for the lawn mower 10.

In an example embodiment, the blade housing 16 and the handle assembly 50 are made of substantially the same or similar materials. For example, the blade housing 16 and the handle bracket could each be made of steel, composite materials, plastics or other sufficiently rigid and strong materials. The blade housing 16 and/or other portions of the lawn mower 10 that form a framework or structural platform upon which the components of the lawn mower 10 are assembled may be stamped, molded, welded, secured or otherwise assembled together to define a rugged and durable structure.

As mentioned above, the blade housing 16 is adjustable in height relative to the ground based on the operation of the cutting height adjustment assembly 40. The cutting height adjustment assembly 40 include a first pivot member 100, a second pivot member 110, a linking member 120 and an adjustment member 130. The adjustment member 130 may include a rotatable gear portion 132 and a cap portion 134. The cap portion 134 is operably coupled to the gear portion 132 to turn the gear portion 132 when the cap portion 134 is unlocked. However, the cap portion 134 will be prevented from turning the gear portion 132 when the cap portion 134 is locked as described in greater detail below.

In an example embodiment, the cap portion 134 may be transitioned between being locked and unlocked based on a vertical position of the cap portion 134. In this regard, for example, the cap portion 134 may have a rest state, or normal position, in which the cap portion 134 is locked (and therefore cannot rotate the gear portion 132). The cap portion 134 may be depressed or pushed downward to shift the cap portion 134 to unlock the cap portion 134 and enable the cap portion 134 to be turned by hand (i.e., the operator providing a twisting motion to the cap portion 134) and the cap portion 134 then carries the gear portion 132 with the cap portion 134 while the cap portion 134 turns. Although not required, in some cases, the gear portion 132 may be provided within a housing.

As can be appreciated from FIG. 1, the linking member 120 has a rack portion 122 thereon that engages the gear portion 132 so that rotating the gear portion 132 in the counterclockwise direction would cause the gear portion 132 to engage the rack portion 122 and carry the rack portion 122 and the linking member 120 forward. Forward movement of the linking member 120 will correspondingly adjust the first and second pivot members 100 and 110 forward and raise the height of the blade housing 16 relative to the ground. In particular, the rack portion 122 include a plurality of teeth, ridges or ribs disposed to interface with teeth, ridges, ribs and/or the like of the gear portion 132. Although the teeth, ridges or ribs of the examples shown extend vertically, it should be appreciated that such teeth, ridges or ribs could extend diagonally relative to the ground as well, or have other shapes that permit engagement as described herein.

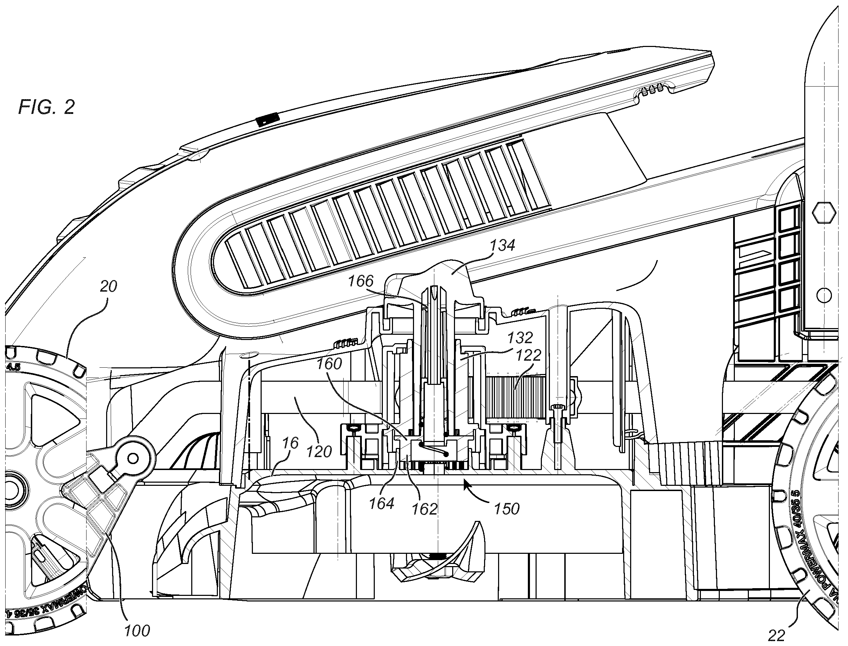

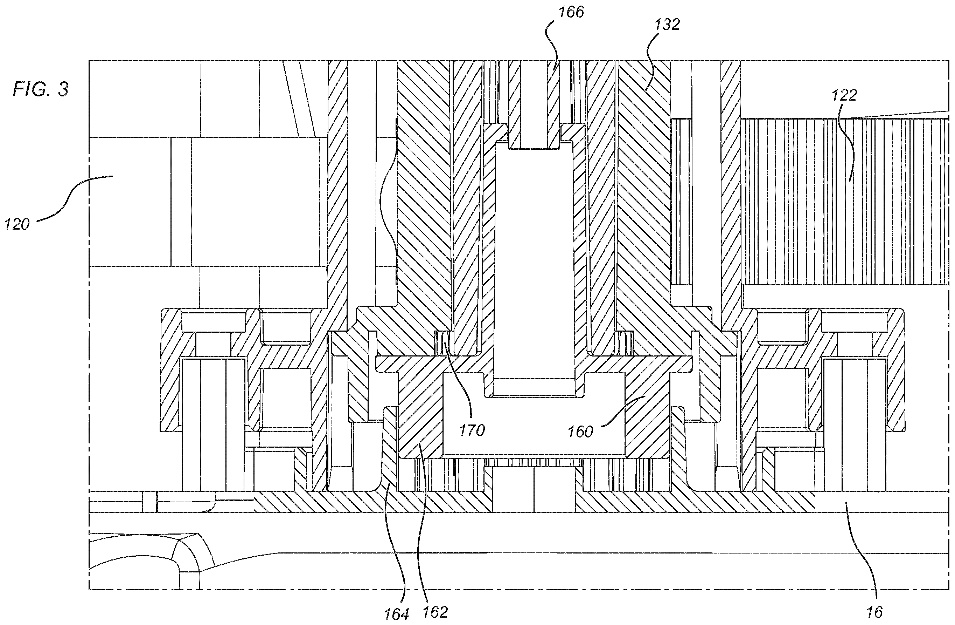

FIG. 2 illustrates a side, cross section view of the lawn mower 10 of one example with the section cut passing through the cutting height adjustment assembly 40 to provide a better view of various components of the cutting height adjustment assembly 40. FIG. 3 illustrates a zoomed in or close up view of the cross section view of FIG. 2. As shown in FIG. 2, the first pivot member 100 may be substantially triangular in shape with one corner of the triangle being pivotally coupled to the linking member 120, one corner being rotatably coupled to the front wheel 20, and one corner being pivotally coupled to the blade housing 16 (or a portion of the chassis that is also coupled to the blade housing 16). The second pivot member 110 is similarly shaped and similarly operably coupled to the blade housing 16, the rear wheel 22 and the linking member 120.

Thus, as the linking member 120 moves forward, the first and second pivot members 100 and 110 each correspondingly pivot forward (or in a counterclockwise direction for the view shown in FIG. 2). As the linking member 120 moves forward, the first pivot member 100 begins to pivot about the corner of the first pivot member 100 that is operably coupled to the front wheel 20. This causes the corner of the first pivot member 100 that is pivotally coupled to the blade housing 16 to be lifted and thereby also lift the height of the blade housing 16 relative to the ground. The second pivot member 110 (although not shown in FIG. 2) may move and rotate in a similar manner.

Accordingly, it can be appreciated that rotation of the cap portion 134, which is enabled responsive to the cap portion 134 being depressed or pushed downward to unlock the cap portion 134, causes corresponding rotation of the gear portion 132. Rotation of the gear portion 132 causes linear movement of the rack portion 122 and the linking member 120 on which the rack portion 122 is mounted. Linear movement of the rack portion 122 and the linking member 120 is translated to the first and second pivot members 100 and 110 to raise or lower the height of the blade housing 16. When the cap portion 134 is released, the cap portion 134 becomes locked and the rotation of the gear portion 132 is prevented. The gear portion 132 then remains in a fixed relationship with the rack portion 122 and the linking member 120 to hold the blade housing 16 at the corresponding selected height. A locking assembly 150 of an example embodiment is therefore provided as a part of the cutting height adjustment assembly 40 in order to facilitate the transition of the cap portion 134 between locked and unlocked states.

The locking assembly 150 can be seen in both FIGS. 2 and 3. As shown in FIGS. 2 and 3, the locking assembly 150 include a locking member 160 that includes a guide portion 162 that is configured to ride in (or slidably engage) a guide 164 that is provided on a portion of the blade housing 16 (or chassis). The guide 164 may be generally formed from sidewalls that extend upward (e.g., substantially perpendicular to the ground or to a top surface of the blade housing 16) in a shape that substantially matches the shape of the guide portion 162. The guide portion 162 may be formed slightly smaller than (or larger than) the guide 164 to slidable engage the inside surface (or outside surface) of the guide 164 as the locking member 160 moves up and down based on pushing of the cap portion 134 up and down, respectively. The cap portion 134 may be operably coupled to a shaft 166 that pushes downward on the locking member 160 when the cap portion 134 is pushed downward.

As shown in FIG. 2, the guide portion 162 may face downward to engage the upward facing guide 164. In an example embodiment, a spring or other biasing member may be provided in the interior space formed by the guide portion 162 and the guide 164 and the spring may push against the blade housing 16 (or chassis) to bias the locking member 160, the shaft 166 and thereby also the cap portion 134 upward. The cap portion 134 may therefore be biased toward a locked state.

The locking member 160 may include protrusions 170 that face upward on an opposite side of the locking member 160 relative to the guide portion 162. The protrusions 170 may engage downward facing protrusions or recesses provided on (or operably coupled with) the gear portion 132. When the protrusions 170 are forced upward (e.g., by the spring) to engage the downward facing protrusions or recesses of the gear portion 132, the gear portion 132 is prevented from rotating (e.g., when a twisting force is exerted on the cap portion 134). However, when the cap portion 134 is pushed downward, the shaft 166 presses downward on the locking member 160 (to overcome the spring force) to disengage the protrusions 170 from engagement with the downward facing protrusions or recesses of the gear portion 132 thereby unlocking the cap portion 134 and allowing the gear portion 132 to turn with the cap portion 134. The guide portion 162 rides downward within the guide 164 when the shaft 166 presses the locking member 160 downward.

When the locking member 160 is in a normal or rest state, the locking member 160 is actually being forced upward by the spring. The engagement between the protrusions 170 and the gear portion 132 (by direct or indirect operable coupling) holds the gear portion 132 against rotation. As discussed above, this holds the rack portion 122 and the linking member 120 to maintain the selected height of the blade housing 16. However, the weight of the engine 18 (and the majority of the weight of the lawn mower 10) may be resting on the linking member 120 via the first and second pivot members 100 and 110 to tend to force movement of the rack portion 122 to the lowest height setting of the blade housing 160. Thus, a force may be exerted on the linking member 120 (in this case, in a rearward direction). For an engine or mower weight of about 10 kg, the force could be about 75 N. this force is translated into a torque placed on the gear portion 132 that tends to try to force the gear portion 132 to turn. The guide portion 162 therefore exerts a force on the guide 164 and this force could also be about 75 N in the example of a 10 kg engine or mower.

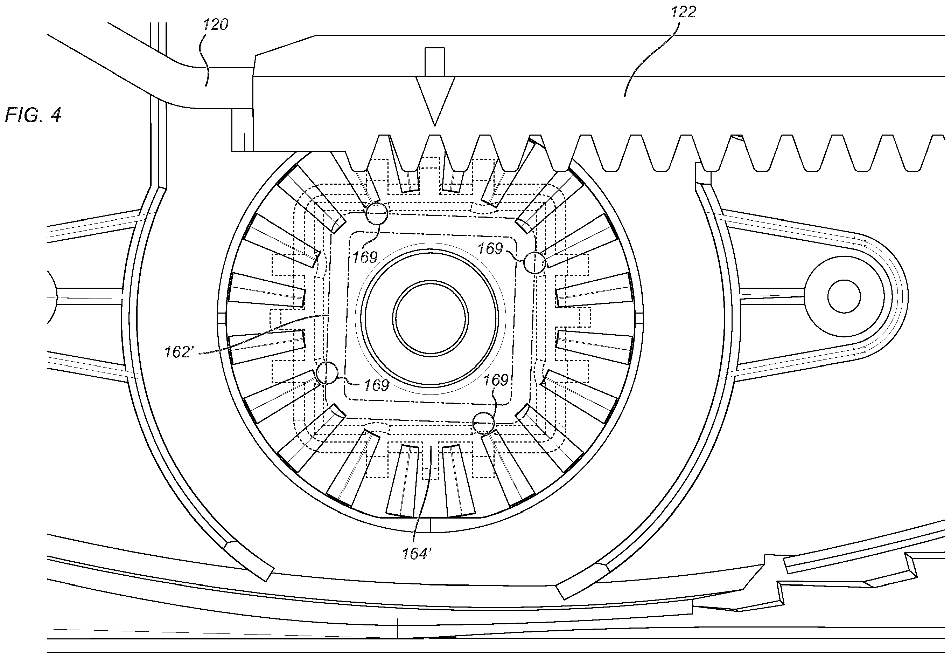

FIG. 4 illustrates an example of what could happen if the force were distributed over a square shaped guide 164' (via a square shaped guide portion 162'). As shown in FIG. 4, four contact points 169 may exert a relatively large force on corresponding sidewalls of the guide 164'. Over time, the guide 164' could become slightly deformed and the deformation may either reduce the accuracy and rigidity of height adjustment settings or, in a worst case scenario, interfere with the ability of the guide portion 162' to smoothly slide in the guide 164' to transition between locked and unlocked states.

To ensure that the guide 164 has less likelihood of being deformed, some example embodiments may provide for greater distribution of the forces that the guide portion 162 exerts on the guide 164. In the example of FIG. 4, the guide 164' receives forces distributed over only four contact points. Thus, some example embodiments provide the guide 164 and the guide portion 162 to have more than four contact points. To achieve this, the guide 164 could have a number of different shapes (e.g., pentagonal, hexagonal, octagonal and/or the like), and the guide portion 162 could be correspondingly shaped to fit the guide 164. The length of the guide 164 may also be increased to increase the amount of overlap between the guide 164 and the guide portion 162 when the locking member 160 is in the locked state (i.e., biased upward).

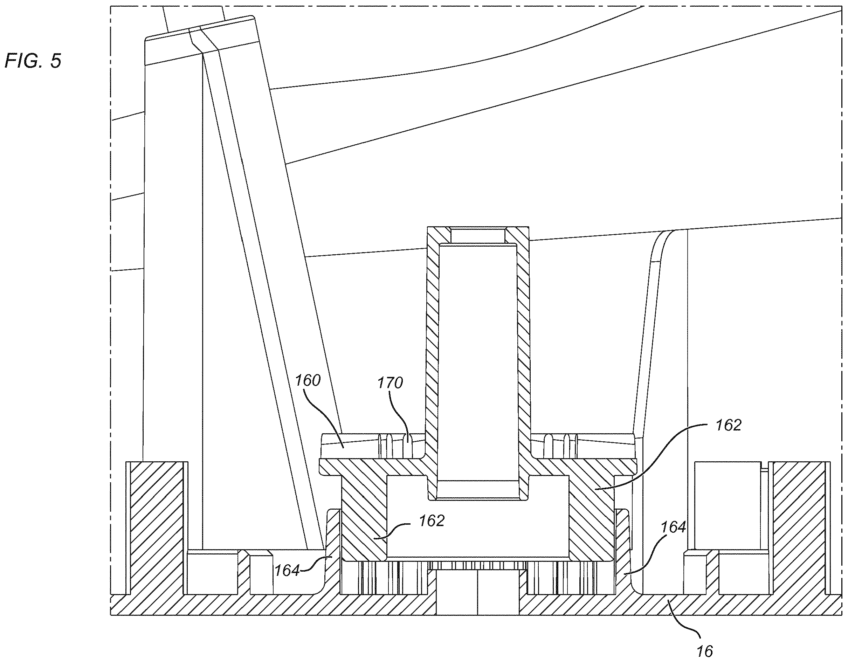

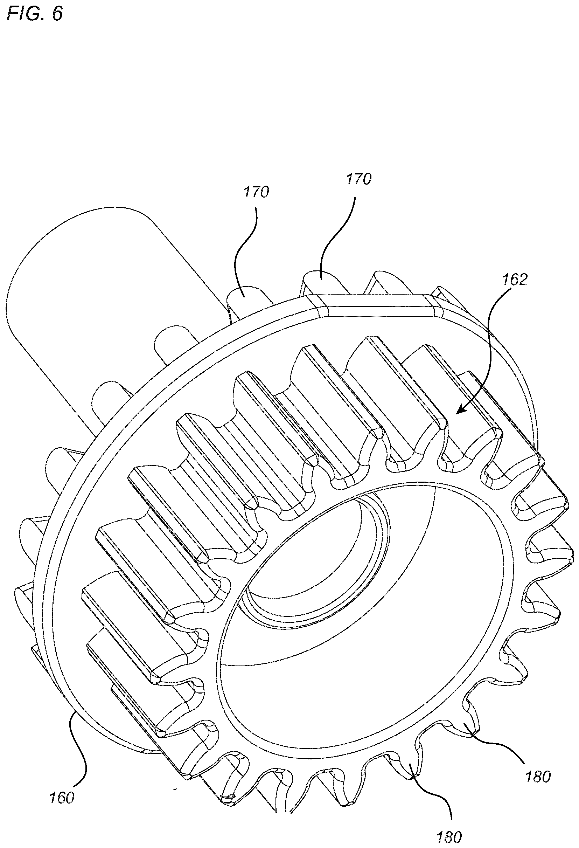

FIG. 5 illustrates a cross sectional side view of one example embodiment of the guide 164 and guide portion 162 in which a larger overlap between the guide 164 and guide portion 162 is provided (e.g., about 6.9 mm). FIG. 6 illustrates a perspective view of the guide portion 162 in isolation, and it should be appreciated that the guide 164 is shaped correspondingly. The guide portion 162 has a plurality of projections 180 and the projections 180 each will have a corresponding contact point with the guide 164. Thus, in this example in which twenty projections 180 are provided, the force exerted on the locking member 20 will be divided by twenty to determine the amount of force on the sidewalls of the guide 164. Thus, the deformation of the guide 164 is unlikely and the cutting height adjustment assembly 40 may be expected to perform consistently over a large number of cycles and for substantially the life of the lawn mower 10 with little to no degradation.

Accordingly, a lawn mower of an example embodiment include a blade housing configured to house at least one blade, a motor configured to selectively rotate the at least one blade within the blade housing, a mobility assembly including front wheels and rear wheels, and a cutting height adjustment assembly. The cutting height adjustment assembly is configured to convert linear movement of a linking member that is operably coupled between at least one of the front wheels and at least one of the rear wheels into a height adjustment of the blade housing. The cutting height adjustment assembly includes a locking assembly having a locking member that engages a guide that is operably coupled to the blade housing at five or more contact points to hold the cutting height adjustment assembly at a selected height of the blade housing.

In some embodiments, the features described above may be augmented or modified, or additional features may be added. These augmentations, modifications and additions may be optional and may be provided in any combination. Thus, although some example modifications, augmentations and additions are listed below, it should be appreciated that any of the modifications, augmentations and additions could be implemented individually or in combination with one or more, or even all of the other modifications, augmentations and additions that are listed. In some examples, the gear portion may be operably coupled to a cap portion. The cap portion may be configured to be depressed to unlock the cap portion and enable the cap portion to turn the gear portion and thereby translate the rack portion in the forward or rearward direction, and to lock the gear portion to prevent movement thereof when the cap portion is locked and not depressed. In an example embodiment, the cap portion may be operably coupled to a shaft. The shaft may be operably coupled to the locking member to move the locking member upward and downward with the cap portion as the cap portion transitions between being locked and unlocked, respectively. In some examples, the locking member may include protrusions extending to engage a portion of the gear portion when the cap portion is locked. The protrusions may not engage the gear portion to enable the gear portion to turn with the cap portion when the cap portion is unlocked. In an example embodiment, any or all of the above described modifications may be employed individually or in combination, and the locking member may include a guide portion having a shape substantially corresponding to a shape of the guide. In such an example, the guide portion may have a plurality of projections extending radially outwardly therefrom. The projections may slidably engage the guide when the locking member moves upward and downward. The projections may form a number of contact points with the guide equal to a number of the projections to prevent rotation of the locking member to facilitate holding of the cutting height adjustment assembly at the selected height of the blade housing. In some examples, a minimum overlap between the guide portion and the guide is greater than 2mm, or perhaps greater than 6 mm.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are possible within the limits of the appended claims.

## Claims

1. A lawn mower (10) comprising:
a blade housing (16) configured to house at least one blade;
a motor (18) configured to selectively rotate the at least one blade within the blade housing (16);
a mobility assembly including front wheels (20) and rear wheels (22); and
a cutting height adjustment assembly (40) configured to convert linear movement of a linking member (120) that is operably coupled between at least one of the front wheels (20) and at least one of the rear wheels (22) into a height adjustment of the blade housing (16), wherein the cutting height adjustment assembly (40) comprises:
a first pivot member (100) operably coupled to the linking member (120), to the at least one of the front wheels (20) and to the blade housing (16);
a second pivot member (110) operably coupled to the linking member (120), to the at least one of the rear wheels (22) and to the blade housing (16);
an adjusting member (130) operably coupled to the linking member (120) between the first pivot member (100) and the second pivot member (110);
**characterised in that** the cutting height adjustment assembly (40) comprises a locking assembly (150) including a locking member (160) that engages a guide (164) that is operably coupled to the blade housing (16), at five or more contact points to hold the cutting height adjustment assembly (40) at a selected height of the blade housing (16), wherein the linking member (120) comprises a rack portion (122) comprising a plurality of teeth, ridges or ribs disposed to interface with a gear portion (132) of the adjusting member (130), which gear portion (132) is arranged to engage with the locking member (160) when the locking assembly is in a locked state.

2. The lawn mower (10) of claim 1, wherein the adjusting member (130) is rotated about a vertical axis to move the linking member (120) linearly in a forward or rearward direction and correspondingly pivot the first pivot member (100) and the second pivot member (110), respectively.

3. The lawn mower (10) of any of claims 1-2, wherein the gear portion (132) is -operably coupled to a cap portion (134), the cap portion (134) being configured to be depressed to unlock the cap portion (134) and enable the cap portion (134) to turn the gear portion (132) and thereby translate the rack portion (122) in the forward or rearward direction, and to lock the gear portion (132) to prevent movement thereof when the cap portion (134) is locked and not depressed.

4. The lawn mower (10) of claim 3, wherein the cap portion (134) is operably coupled to a shaft (166), the shaft (166) being operably coupled to the locking member (160) to move the locking member (160) upward and downward with the cap portion (134) as the cap portion (134) transitions between being locked and unlocked, respectively.

5. The lawn mower (10) of claim 4, wherein the locking member (160) comprises protrusions (170) extending to engage a portion of the gear portion (132) when the cap portion (134) is locked, and the protrusions (170) do not engage the gear portion (132) to enable the gear portion (132) to turn with the cap portion (134) when the cap portion (134) is unlocked.

6. The lawn mower (10) of any of claims 1 to 5, wherein the locking member (160) comprises a guide portion (162) having a shape substantially corresponding to a shape of the guide (164).

7. The lawn mower (10) of claim 6, wherein the guide portion (162) has a plurality of projections (180) extending radially outwardly therefrom, the projections (180) slidably engaging the guide (164) when the locking member (160) moves upward and downward, and the projections (180) forming a number of contact points with the guide (164) equal to a number of the projections (180) to prevent rotation of the locking member (160) to facilitate holding of the cutting height adjustment assembly (40) at the selected height of the blade housing (16).

8. The lawn mower (10) of claim 6, wherein a minimum overlap between the guide portion (162) and the guide (164) is greater than 2 mm.

## Patentansprüche

1. Rasenmäher (10) umfassend:
ein Klingengehäuse (16), das dazu ausgestaltet ist, zumindest eine Klinge einzuhausen;
einen Motor (18), der dazu ausgestaltet ist, selektiv die zumindest eine Klinge innerhalb des Klingengehäuses (16) zu drehen;
eine Mobilitätsanordnung, die Vorderräder (20) und Hinterräder (22) beinhaltet; und
eine Schnitthöhen-Einstellanordnung (40), die dazu ausgestaltet ist, eine lineare Bewegung eines Anlenkungselements (120), das zwischen zumindest einem der Vorderräder (20) und zumindest einem der Hinterräder (22) wirksam gekoppelt ist, in eine Höheneinstellung des Klingengehäuses (16) umzuwandeln,
wobei die Schnitthöhen-Einstellanordnung (40) umfasst:
ein erstes Schwenkelement (100), das wirksam mit dem Anlenkungselement (120), mit dem zumindest einen der Vorderräder (20) und mit dem Klingengehäuse (16) gekoppelt ist;
ein zweites Schwenkelement (110), das wirksam mit dem Anlenkungselement (120), mit dem zumindest einen der Hinterräder (22) und mit dem Klingengehäuse (16) gekoppelt ist;
ein Einstellelement (130), das mit dem Anlenkungselement (120) zwischen dem ersten Schwenkelement (100) und dem zweiten Schwenkelement (110) wirksam gekoppelt ist;
**dadurch gekennzeichnet, dass** die Schnitthöhen-Einstellanordnung (40) eine Sicherungsanordnung (150) umfasst, die ein Sicherungselement (160) enthält, das in eine Führung (164) eingreift, die mit dem Klingengehäuse (16) an fünf oder mehr Kontaktpunkten wirksam gekoppelt ist, um die Schnitthöhen-Einstellanordnung (40) an einer ausgewählten Höhe des Klingengehäuses (16) zu halten,
wobei das Anlenkungselement (120) einen Zahnstangenabschnitt (122) umfasst, der eine Vielzahl von Zähnen, Wülsten oder Rippen aufweist, der so angeordnet ist, dass er mit einem Zahnradabschnitt (132) des Einstellelements (130) zusammenwirkt, wobei der Zahnradabschnitt (132) so angeordnet ist, um mit dem Sicherungselement (160) in Eingriff zu gelangen, wenn die Sicherungsanordnung in einem gesicherten Zustand ist.

2. Rasenmäher (10) nach Anspruch 1, wobei das Einstellelement (130) um eine vertikale Achse gedreht wird, um das Anlenkungselement (120) linear in eine Vorwärts- oder Rückwärtsrichtung zu bewegen und das erste Schwenkelement (100) und das zweite Schwenkelement (110) jeweils entsprechend zu schwenken.

3. Rasenmäher (10) nach einem der Ansprüche 1 bis 2, wobei der Zahnradabschnitt (132) wirksam mit einem Kappenabschnitt (134) gekoppelt ist, wobei der Kappenabschnitt (134) dazu ausgestaltet ist, heruntergedrückt zu werden, um den Kappenabschnitt (134) zu entsichern und den Kappenabschnitt (134) in die Lage zu versetzen, den Zahnradabschnitt (132) zu drehen und dadurch den Zahnstangenabschnitt (122) in der Vorwärts- oder Rückwärtsrichtung zu verschieben, und um den Zahnradabschnitt (132) zu sichern, um die Bewegung desselben zu verhindern, wenn der Kappenabschnitt (134) gesichert und nicht heruntergedrückt ist.

4. Rasenmäher (10) nach Anspruch 3, wobei der Kappenabschnitt (134) wirksam mit einer Welle (166) gekoppelt ist, wobei die Welle (166) wirksam mit dem Sicherungselement (160) gekoppelt ist, um das Sicherungselement (160) mit dem Kappenabschnitt (134) auf und ab zu bewegen, wenn der Kappenabschnitt (134) jeweils zwischen dem gesicherten und dem ungesicherten Zustand übergeht.

5. Rasenmäher (10) nach Anspruch 4, wobei das Sicherungselement (160) Vorsprünge (170) umfasst, die sich so erstrecken, dass sie mit einem Abschnitt des Zahnradabschnitts (132) in Eingriff gelangen, wenn der Kappenabschnitt (134) gesichert ist, und die Vorsprünge (170) nicht mit dem Zahnradabschnitt (132) in Eingriff gelangen, um den Zahnradabschnitt (132) in die Lage zu versetzen, sich mit dem Kappenabschnitt (134) zu drehen, wenn der Kappenabschnitt (134) entsichert ist.

6. Rasenmäher (10) nach einem der Ansprüche 1 bis 5, wobei das Sicherungselement (160) einen Führungsabschnitt (162) umfasst, der eine Gestalt aufweist, die im Wesentlichen einer Gestalt der Führung (164) entspricht.

7. Rasenmäher (10) nach Anspruch 6, wobei der Führungsabschnitt (162) eine Vielzahl von Vorsprüngen (180) aufweist, die sich radial davon nach außen erstrecken, wobei die Vorsprünge (180) gleitend mit der Führung (164) in Eingriff steht, wenn das Sicherungselement (160) sich aufwärts und abwärts bewegt, und die Vorsprünge (180) eine Anzahl von Kontaktpunkten mit der Führung (164) bilden, deren Anzahl gleich einer Anzahl der Vorsprünge (180) ist, um die Drehung des Sicherungselements (160) zu verhindern, um das Halten der Schnitthöhen-Einstellanordnung (40) an der ausgewählten Höhe des Klingengehäuses (16) zu erleichtern.

8. Rasenmäher (10) nach Anspruch 6, wobei eine minimale Überlappung zwischen dem Führungsabschnitt (162) und der Führung (164) größer als 2 mm ist.

## Revendications

1. Tondeuse à gazon (10) comprenant :
un boîtier de lame (16) configuré pour recevoir au moins une lame ;
un moteur (18) configuré pour faire tourner sélectivement l'au moins une lame dans le boîtier de lame (16) ;
un ensemble de mobilité comportant des roues avant (20) et des roues arrière (22) ; et
un ensemble de réglage de hauteur de coupe (40) configuré pour convertir un mouvement linéaire d'un élément de liaison (120) qui est couplé de manière fonctionnelle entre au moins l'une des roues avant (20) et au moins l'une des roues arrière (22) en un réglage de hauteur du boîtier de lame (16),
dans laquelle l'ensemble de réglage de hauteur de coupe (40) comprend :
un premier élément pivotant (100) couplé de manière fonctionnelle à l'élément de liaison (120), à l'au moins une des roues avant (20) et au boîtier de lame (16) ;
un deuxième élément pivotant (110) couplé de manière fonctionnelle à l'élément de liaison (120), à l'au moins une des roues arrière (22) et au boîtier de lame (16) ;
un élément de réglage (130) couplé de manière fonctionnelle à l'élément de liaison (120) entre le premier élément pivotant (100) et le deuxième élément pivotant (110) ;
**caractérisée en ce que** l'ensemble de réglage de hauteur de coupe (40) comprend un ensemble de verrouillage (150) comportant un élément de verrouillage (160) qui s'engage avec un guide (164) qui est couplé de manière fonctionnelle au boîtier de lame (16), à cinq points de contact ou plus pour maintenir l'ensemble de réglage de hauteur de coupe (40) à une hauteur sélectionnée du boîtier de lame (16),
dans laquelle l'élément de liaison (120) comprend une partie de crémaillère (122) comprenant une pluralité de dents, de crêtes ou de nervures disposées pour faire interface avec une partie d'engrenage (132) de l'élément de réglage (130), laquelle partie d'engrenage (132) est agencée pour s'engager avec l'élément de verrouillage (160) lorsque l'ensemble de verrouillage est dans un état verrouillé.

2. Tondeuse à gazon (10) de la revendication 1, dans laquelle l'élément de réglage (130) est mis en rotation autour d'un axe vertical pour déplacer l'élément de liaison (120) linéairement dans une direction vers l'avant ou vers l'arrière et faire pivoter en conséquence le premier élément pivotant (100) et le deuxième élément pivotant (110), respectivement.

3. Tondeuse à gazon (10) de l'une des revendications 1 et 2, dans laquelle la partie d'engrenage (132) est couplée de manière fonctionnelle à une partie de capuchon (134), la partie de capuchon (134) étant configurée pour être enfoncée pour déverrouiller la partie de capuchon (134) et permettre à la partie de capuchon (134) de faire tourner la partie d'engrenage (132) et ainsi déplacer en translation la partie de crémaillère (122) dans la direction vers l'avant ou vers l'arrière, et verrouiller la partie d'engrenage (132) pour empêcher son mouvement lorsque la partie de capuchon (134) est verrouillée et non enfoncée.

4. Tondeuse à gazon (10) de la revendication 3, dans laquelle la partie de capuchon (134) est couplée de manière fonctionnelle à un arbre (166), l'arbre (166) étant couplé de manière fonctionnelle à l'élément de verrouillage (160) pour déplacer l'élément de verrouillage (160) vers le haut et vers le bas avec la partie de capuchon (134) à mesure que la partie de capuchon (134) effectue une transition entre l'état verrouillé et l'état déverrouillé, respectivement.

5. Tondeuse à gazon (10) de la revendication 4, dans laquelle l'élément de verrouillage (160) comprend des protubérances (170) s'étendant pour s'engager avec une partie de la partie d'engrenage (132) lorsque la partie de capuchon (134) est verrouillée, et les protubérances (170) ne s'engagent pas avec la partie d'engrenage (132) pour permettre à la partie d'engrenage (132) de tourner avec la partie de capuchon (134) lorsque la partie de capuchon (134) est déverrouillée.

6. Tondeuse à gazon (10) de l'une des revendications 1 à 5, dans laquelle l'élément de verrouillage (160) comprend une partie de guidage (162) ayant une forme correspondant essentiellement à une forme du guide (164).

7. Tondeuse à gazon (10) de la revendication 6, dans laquelle la partie de guidage (162) a une pluralité de saillies (180) s'étendant radialement vers l'extérieur à partir de celle-ci, les saillies (180) s'engageant en coulissement avec le guide (164) lorsque l'élément de verrouillage (160) se déplace vers le haut et vers le bas, et les saillies (180) formant un nombre de points de contact avec le guide (164) égal à un nombre de saillies (180) pour empêcher la rotation de l'élément de verrouillage (160) afin de faciliter le maintien de l'ensemble de réglage de hauteur de coupe (40) à la hauteur sélectionnée du boîtier de lame (16).

8. Tondeuse à gazon (10) de la revendication 6, dans laquelle un chevauchement minimal entre la partie de guidage (162) et le guide (164) est supérieur à 2 mm.
